# EUROPEAN PATENT APPLICATION

(11) **EP 1 555 569 A1**
(43) Date of publication of application: **20.07.2005**
(21) Application number: 03758783.9
(22) Date of filing: 22.10.2003
(51) Int. Cl.: G02F 1/17, G02F 1/167

(54) **DISPLAY ELEMENT AND MANUFACTURING METHOD THEREOF**

(30) Priority: 22.10.2002 JP 2002307347; 05.12.2002 JP 2002353476; 05.12.2002 JP 2002353529; 26.12.2002 JP 2002376916; 06.06.2003 JP 2003162837
(71) Applicant: Oji Paper Co., Ltd., Tokyo 104-0061 (JP)
(72) Inventor: HAYASHI, Shigeo, Kawasaki-shi, Kanagawa 215-0018 (JP)
(74) Representative: Poulin, Gérard
(86) International application number: PCT/JP2003/013492
(87) International publication number: WO 2004/038498

(57) **Abstract**

A method for manufacturing rotatable two-color particles for a display which is a main component for a display device that may be used in a personal computer, a mobile telephone, and a mobile terminal as well as in a digital paper and a digital book. A display element and a display sheet manufacturing method are also disclosed. The two-color particle manufacturing method includes: a step for bringing, in air or in liquid, a first liquid droplet having a first hue into contact with a second liquid droplet having a hue different from the first hue into a single liquid droplet; and a step for bringing the liquid droplet into contact with a reaction liquid so as to solidify it instantaneously. The two liquid droplets may be injected through a spray nozzle or a jet nozzle. Moreover, the first liquid droplet and the second liquid droplet preferably have different electric charges or different electric charge densities if the charges are identical. Furthermore, the liquid droplets may contain a pigment and a charge control agent.

## Description

### Technical Field

The present invention relates to a method for manufacturing a two-colored rotatable particle for a display, which is a principal structural component of a display device which may be used in a display unit which is used as a display for a personal computer, a portable telephone, a mobile terminal or the like, or which can obtain information from such a device and can be independently transported (for example, digital paper or a digital book or the like) and to an element for display and to a method of manufacturing a display sheet.

### Background Art

There is a known method of so-called rotatable particle type display which is described in the specifications of United States Patent (hereinafter abbreviated as "USP") 4,126,854, USP 4,143,103, USP 5,262,098, USP 5,389,945, and USP 6,422,687, and in Japanese Laid-Open Patent Application No. Hei 1-282589 and Japanese Laid-Open Patent Application No. Hei 6-226875. This method is one in which particles which have two hemispheres of different colors are used as a display medium.

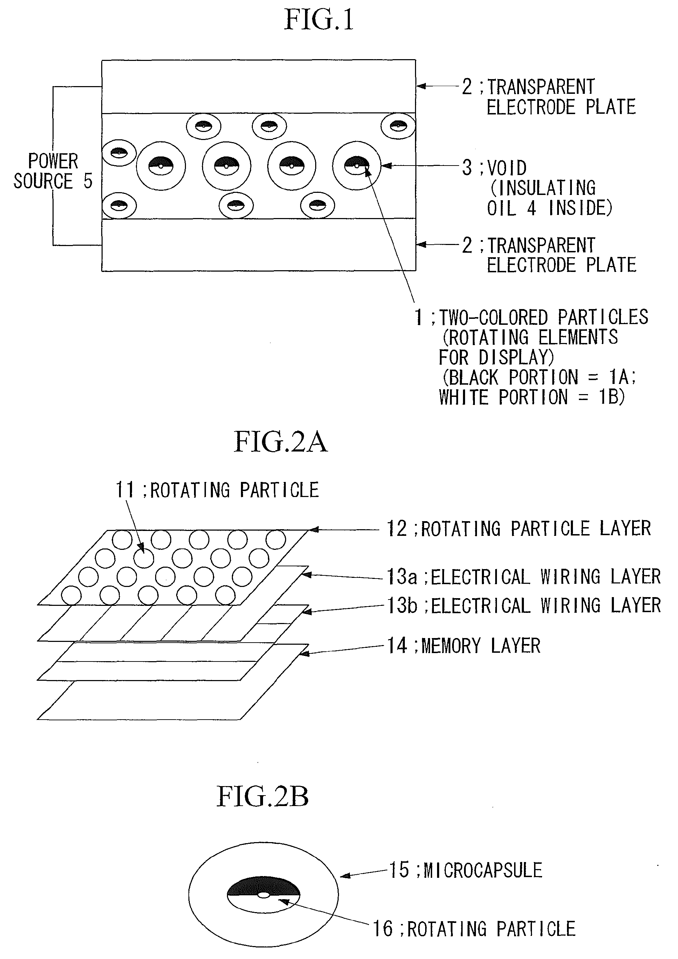

For example, as shown in FIG. 1, the structure of a distributed rotating particle panel for display with an electric field is one in which two-colored particles 1 are used which are colored differently in the two hemispheres 1a and 1b, and each of the two-colored particles 1 is sandwiched between front and back transparent electrode plates 2, in the state of being received in a spherical void 3 which is filled with an insulating oil 4, and an electric field is applied to the front and back surfaces by an electric power source 5, so that thereby rotational movement of the particles is caused, thus creating an image.

In the past, as separately coloring methods for manufacturing this type of rotating particles for display, a method of performing coloring by vapor deposition or spraying upon the surfaces of particles which have been formed as spheres, or a method of dispersing dye or pigment in hemispheres of rotating particles for display by gravity, electrical force, magnetic force, centrifugal force or the like while maintaining a state of liquefaction of the principal component of the particles, or the like, are known.

Generally, with particles within a liquid, transfer of electric charge is performed between the particles and the liquid, and double electrical layers are formed, in which the particles are electrified with positive and negative charges. With a rotating particle for display, with a surface having at least two regions which are of different colors, it is arranged so as to have two or more regions with different electrification characteristics within the liquid. The most simple rotating particle for display which has the above-described characteristics is the case in which, for example, the surface of the particle is made of materials which are different, so that its two hemispherical surfaces exhibit different colors. By making the two hemispheres from different materials, the amount of surface electrical charge upon the particle within the liquid is different for the two hemispheres, and the particle is endowed with a moment in the direction of polarity within the liquid. When an electric field is applied to this type of particle, a torque acts upon the particle so as to make its direction of polarity lie along the direction of the electric field, and the particle lines up both of its hemispherical surfaces in that direction. If the direction of the electric field is reversed, the particle inverts, so that the display changes to the opposite color.

Accordingly, for a rotating particle for display, which is the main structural component of a rotating particle type display which uses this method, it is extremely important to perform the separate coloring of the surface perfectly, and moreover to control its areas which are colored separately.

For example, a method of manufacture is known in which two components, which are formed as plate shaped bodies or belt shaped bodies, and which have different colors and electrification characteristics within a dielectric liquid, are adhered together, and are subsequently pulverized so as to_produce particles (Japanese Laid-Open Patent Application No. Hei 1-282589). For this method of mutual adhesion, there have been proposed methods of forming a laminate of the two components, of painting each of the components upon the front and the back of a substrate, or of pressing out the two types of component. Furthermore, as a method for pulverization, an impact type pulverization device or a jet pulverization device is proposed. However, since these methods reduce the material to minute particles by mechanical pulverization, the shapes which they produce are not perfectly circular, and there is the problem that variations in the shape and size are great.

Furthermore, a method has been proposed (see the specification of USP 6,422,687) in which two liquid materials which have different colors and moreover different electric charges are discharged from nozzles, and coalesce under the action of electrostatic force; and then the solidification of the particles which have coalesced is performed by them being caused to solidify as the temperature drops, or by them being caused to harden by being combined with a hardener. However, this method requires a device for heating the materials and a device for cooling the particles, so that there is a problem because the device itself becomes complicated.

Furthermore, a method has been proposed (see Japanese Laid-Open Patent Application No. Hei 6-226875) in which melted waxes which have various different colors are supplied to the front and the back of a spinning disk, and these various waxes coalesce at the edge portion of the spinning disk and moreover turn into a plurality of liquid droplets, and the liquid droplets are turned into solid particles by passing into liquid nitrogen vapor. Since this method requires a device for heating the materials and a device for cooling the particles, there is still the problem that the device itself becomes complicated.

Furthermore, there has been proposed a method (see Japanese Laid-Open Patent Application No. Hei 10-214050) in which an aqueous polyvinyl alcohol solution including dispersed dielectric particles, such as barium titanate, is spin coated, and, after drying, the lower halves of the particles are covered with polyvinyl alcohol, while their top halves are exposed; and, in this state, a material such as copper phthalocyanine is vapor deposited, and thereafter the polyvinyl alcohol coating layer is dissolved away; or a method (see Japanese Laid-Open Patent Application No. Hei 11-85069) in which particles such as ones of zinc oxide which are photoconductive are exposed from one side, and are developed with toner, so as to color the hemispherical sides of the particles which have been fixed; or the like. However, there is a problem of productivity with these methods as well, since the processes are complicated.

Furthermore, a so-called magnetic rotating particle type display method is known, as described in Proceedings of the SID (Vol. 18/3 & 4, Third and Fourth Quarters of 1977), and in Japanese Laid Open Patent Application No. 2002-6346, Japanese Laid-Open Patent Application No. 2002-62546, and Japanese Laid-Open Patent Application No. 2002-258329.

This method is one which displays an image by rotating spherical particles of a magnetic substance, of which one of the hemispherical surfaces has been colored white and the remaining hemispherical surface has been colored black.

FIG. 2a is a figure showing a structural example of a rotating magnetic particle display, and in this figure, in order from the top, there are superimposed a rotating particle layer 12 which displays an image by the surface colors of rotating particles 11, electrical wiring layers 13a and 13b which have the function of generating a magnetic field, and a memory layer 14 which, by the electrical wiring layers, imparts a magnetic field for rotation to the rotating particle layer 12 which is magnetized. In the rotating particle layer, as shown in FIG. 2b, rotating particles 11 which are made from a magnetic substance, i.e., iron oxide, are arranged by being enveloped in microcapsules. The electrical wiring layers consist of copper lead wires 13a and 13b which are extended in the form of an X-Y matrix, and, due to the magnetic fields of the surfaces which are surrounded by the X lines and the Y lines, the magnetization direction of the magnetic substance layer in the locations which correspond to picture element portions is reversed. Upon the other side from the rotating particle layer 12, there is provided the memory layer 14 which is made from a magnetic substance, and the magnetic field which is applied to the rotating magnetic particles is maintained by magnetizing the memory layer, so that display is performed.

With regard to the method for separately coloring the rotating particles which are used in this kind of rotating magnetic particle type display, in the above documents, there are described methods for the manufacture of magnetic particles, in which, for spherical particles which are made from a magnetic substance, or for spherical particles in which a magnetic substance such as magnetite, ferrite, or the like is included in a resin such as polystyrene, polyethylene or the like, (1) an inorganic pigment such as titanium dioxide, zinc sulfate or the like, or an organic pigment such as phthalocyanine or the like, or various kinds of dye or the like, is dispersed in a solvent, or, according to requirements, in a binder resin, and is applied by spraying or the like; or (2) the particles are processed electrochemically by plating or the like; or (3) the particles are spattered or vapor deposited with the pigment or a metal such as Au, Ag, or Al; or the like. For coloring them separately, two-colored particles have been manufactured by a method of fixing their noncolored surfaces in an adhesive material or embedding them in a resin layer, or floating them within a liquid whose specific gravity has been adjusted, and by performing coloration only of their exposed surfaces.

As described above, in prior art methods of manufacturing the two-colored rotating particles which are the principal structural components of a rotating particle type display, the devices are complicated, and there has been extreme difficulty in achieving control of the separate coloration and small diameter of the particles (below 50 µm) and the like.

Next, as a method of manufacturing a display sheet which uses two-colored particles, there are known a method of making the two-colored particles into a sheet by enveloping them within microcapsules, and a method of making them into a sheet by dispersing them in a matrix resin, and the like. In application of the two-colored particles to a display, a spherical void which is filled with an insulating oil 4 is necessary around each of the two-colored rotating particles for display. In order to achieve this, a method has been proposed of making a sheet by enveloping the two-colored particles and the insulating oil in microcapsules, and by then further adhering together a plurality of the microcapsules with a binder (see the specification of USP 5,604,027, Japanese Laid-Open Patent Application No. Hei 10-214050, the specification of USP 6,312,340, the specification of USP 6,422,687, and Japanese Laid-Open Patent Application No. 2002-62546).

However when, for example, using two-colored particles which have been obtained by making them into particles by combining waxes, these are enveloped in microcapsules, there is the problem that the wax particles generally can be dissolved in, and can be swollen by, the oil. Furthermore, if the surface layer of the two-colored particles is made by vapor deposition or painting, there is a danger that in the various processes until encapsulation, such as dispersion, emulsification, and the like, the surface layer may be damaged, and may be separated.

Yet further, in making the two-colored particles into a sheet by dispersing them in a matrix resin such as a silicone elastomer, and thereafter swelling the sheet with an insulating oil, and forming cavities between the particles and the matrix resin which are filled with insulating oil, the balance must be managed between the expansive force of the matrix resin due to the insulating oil, the expansive force of the two-colored particles due to the insulating oil, and the adhesive force between the two-colored particles and the interface of the matrix resin. The presence or absence of cavity formation is governed by the combination of the material from which the two-colored particles are made, the matrix material which is used, and the oil which swells the matrix resin. Accordingly, the method of dispersing the two-colored particles in the matrix resin, and of manufacturing the cavities with the insulating oil, is also different according to the materials which are used, and various methods are proposed (see the specification of USP 4,126,854, Japanese Laid-Open Patent Application No. 2002-258330, Japanese Laid-Open Patent Application No. 2002-287175, Japanese Laid-Open Patent Application No. Hei 2002-99004, and Japanese Laid-Open Patent Application No. 2002-258329).

However, with the prior art methods, there is a danger of the matrix resin and the two-colored particles remaining adhered together just as they are, and, furthermore, it is difficult to control the sizes of the two-colored particles and of the voids in the matrix resin.

### Disclosure of Invention

Accordingly, an object of the present invention is to provide a method with which two-colored rotating display particles in a rotating particle type display may be manufactured at excellent efficiency and moreover at a low cost.

Furthermore, as another object of the present invention, it takes as its goal to manufacture two-colored particles which are suitable for encapsulation, and to capsulize them, in a stabilized manner, even though processes are involved in which physical forces such as dispersion and emulsification and the like are imparted, without causing swelling due to the oil. Furthermore, it is to make the microcapsules, together with a binder, into the form of a sheet, and thus to provide a display sheet with which, while it is able to be made flexible, and moreover, the display quality is improved.

A further object of the present invention is, in a method in which rotating two-colored particles for display are dispersed in a rotating particle type display within a matrix resin, thus converting them into a sheet, and the sheet is soaked in insulating oil, so that voids which are filled with oil are formed between the particles and the matrix resin, to form the voids reliably, and to be able to control the size of the voids, thus providing a display sheet whose rotational behavior is excellent.

The present invention relates to a method of manufacturing a two-colored rotating particle for display for use in a display which, by applying an electric field or a magnetic field to a rotating particle dispersion panel for display, performs display by rotation of rotating particles for display, which are present in voids within the rotating particle dispersion panel for display which are filled with oil, and which have optical anisotropy; and also to a rotating element for display, and to a method of manufacturing a display sheet; and it includes the inventions described below.
(1) A method of manufacturing a two-colored particle, including: a step of making a single liquid droplet by contacting together, within air or within a liquid, a first liquid droplet which has a first hue, and a second liquid droplet which has a hue which is different from the first hue; and a step of contacting the single liquid droplet with a reaction liquid so as to harden it instantaneously.
(2) The method of manufacturing a two-colored particle according to (1) above, wherein the electric charges of the first liquid droplet and of the second liquid droplet are different.
(3) The method of manufacturing a two-colored particle according to (1) above, wherein, while the electric charge of the first liquid droplet and of the second liquid droplet is the same, the electric charge density is different.
(4) The method of manufacturing a two-colored particle according to any one of (1) through (3) above, further including a step in which the two-colored particle which has been made is dried, and in which it is arranged that the masses, within the two-colored particle after drying, of the portion which originates in the first liquid droplet and of the portion which originates in the second liquid droplet are different.
(5) The method of manufacturing a two-colored particle according to any one of (1) through (4) above, wherein the first liquid droplet and the second liquid droplet are both ones which include reactive components, and including a step in which the two-colored particle which has been made is dried, and a step of further dissolving and eliminating a reaction product upon the surface of the two-colored particle.
(6) The method of manufacturing a two-colored particle according to any one of (1) through (5) above, wherein the first and second liquid droplets are manufactured with a spray nozzle.
(7) The method of manufacturing a two-colored particle according to any one of (1) through (5) above, wherein the first and second liquid droplets are manufactured with an ink jet nozzle.
(8) The method of manufacturing a two-colored particle according to any one of (1) through (7) above, wherein at least one of the first liquid droplet and the second liquid droplet includes a pigment.
(9) The method of manufacturing a two-colored particle according to any one of (1) through (8) above, wherein the first liquid droplet and the second liquid droplet include an electrification control substance.
(10) A method of manufacturing a particle, including: a step of, using a plurality of liquid droplets, combining a metal into at least one liquid droplet; a step of contacting together the plurality of liquid droplets within air or within a liquid and making them into a single liquid droplet; and a step of contacting the liquid droplet which has become single with a reaction liquid so as to harden it instantaneously.
(11) The method of manufacturing a particle according to (10) above, wherein the metal is a magnetic substance.
(12) The method of manufacturing a particle according to (10) above, wherein, in the particle after it has hardened, among the colors of the portions which originate in the plurality of liquid droplets, the color of a portion which originates in at least one liquid droplet is different from the color of a portion which originates in another liquid droplet.
(13) An element for display which consists of a two-colored particle, insulating oil, and a microcapsule in which the two-colored particle and the insulating oil are enveloped; in which the two-colored particle has been obtained by a method including a step of making a single liquid droplet by contacting together, within air or within a liquid, a first liquid droplet which has been colored, and a second liquid droplet which has a color which is different from the first liquid droplet; and a step of contacting the liquid droplet with a reaction liquid so as to harden it instantaneously.
(14) The display element according to (13) above, wherein the two-colored particle within the microcapsule is rotated by an electric field.
(15) The display element according to (13) or (14) above, wherein a single two-colored particle is enveloped in a single the microcapsule.
(16) The display element according to (13) or (14) above, wherein at least two of the two-colored particles are enveloped in a single microcapsule.
(17) The element for display according to any of (13) through (16) above, wherein the insulating oil includes a surfactant.
(18) A method of manufacturing a display sheet, including: a step of applying a releasing substance upon the surfaces of two-colored particles which have hemispheres of different colors; a step of dispersing the two-colored particles within a matrix resin so as to make a sheet; and a step of soaking the sheet in an insulating oil and dissolving the releasing substance, so as to provide voids filled with insulating oil between the two-colored particle surfaces and the matrix resin.
(19) The method of manufacturing a display sheet according to (18) above, wherein the releasing substance is a polyolefin type material.
(20) The method of manufacturing a display sheet according to (19) above, wherein the polyolefin type material is a paraffin wax.
(21) The method of manufacturing a display sheet according to any one of (18) through (20) above, wherein the matrix resin is a silicone elastomer.
(22) The method of manufacturing a display sheet according to (21) above, wherein the silicone elastomer is a normal temperature hardening type elastomer.
(23) The method of manufacturing a display sheet according to (22) above, wherein the hardening temperature of the silicone elastomer is a temperature which is lower than the melting point of the releasing substance.

### Brief Description of the Drawing

FIG. 1 is a schematic view of a display panel in which two-colored particles which have been manufactured according to the present invention have been used.
FIG. 2a is a schematic view of a display sheet in which two-colored particles rotate due to a magnetic field, and FIG. 2b is a schematic view of a magnetic rotating particle which has been enveloped in a microcapsule.
FIG. 3 is a schematic view for explaining changes to the color of particles along with changes of an electric field.
FIGS. 4a, 4b, and 4c are schematic view of numbers of two-colored particles which are enveloped within microcapsules, and displays.
FIG. 5 is a schematic view of a microcapsule manufacturing nozzle which envelopes a single two-colored particle.
FIG. 6 is a schematic view of a microcapsule manufacturing nozzle which envelopes a single two-colored particle.

### Best Mode for Carrying Out the Invention

In the following, the present invention will be explained in detail.

In the method of manufacturing the two-colored particle of the present invention, a first liquid which has a first hue and a second liquid which has a hue different from the first hue are prepared.

As the "hue", any one of transparency, achromatic color, or chromatic color will be acceptable. In this specification, the meaning of "the first hue and the second hue are different" is that, for a two-colored particle which has been completed, the colors of the portion which originates from a droplet of the first liquid and of a portion which originates from a droplet of the second liquid are different. As the most typical meaning, it may be understood that the colors of the first liquid and the second liquid are different.

Furthermore, a reaction liquid which instantaneously reacts with the above described first liquid and second liquid is prepared. By ejecting the first and the second liquids from the points of thin needles such as, for example, syringes or the like, liquid droplets are produced at the points of the needles. A liquid droplet of the first liquid and a liquid droplet of the second liquid are approached to each another, and are discharged in air or in a liquid so as to contact one another. Due to the surface tension of the two liquids, they become a single liquid droplet in order to minimize their surface area, and, by this droplet falling into the reaction liquid, it becomes a solidified particle.

In the following, by way of example, a method of discharging the liquid droplets in air will be explained. Here, "within air" may mean within atmospheric air, or may mean within an atmosphere whose pressure, humidity, temperature or the like is controlled. Here, the conditions (for example, the viscosities of the liquids, and the time and height for falling into the reaction liquid) are optimized so that the liquid droplets which have contacted with each other in the air do not mix together, and moreover so that they become a single liquid droplet. As for the particle diameters, they depend upon the nozzles which produce the liquid droplets, and, in order to reduce the diameters of the particles, spray nozzles or ink jet nozzles or the like are desirably employed. Another method for controlling the particle diameter is to vary the densities of the first liquid and of the second liquid. The two-colored particles are manufactured within the reaction liquid, and the solvent is evaporated by drying these particles, and, after this drying, they become particles of smaller diameter than the diameter of the two-colored particles within the reaction liquid. With regard to the particle diameter of the two-colored particles of the present invention, the most suitable particle diameter which is demanded differs according to the application, and this diameter is not specifically limited; but a diameter of 10 to 200 µm is desirable if, when used in a display, very fine characters are to be displayed, while a diameter of 200 µm to 2 mm is desirable if large characters are to be displayed upon a large screen.

A spray nozzle is a nozzle which ejects a substance in the form of a mist by sending pressurized air by a compressor, mixing it, on its way, with the liquid, and ejecting it from a narrow orifice; and it is possible to use a misting device which is commercially available. Furthermore, an ink jet nozzle is a nozzle of the ink jet type which is used as a so-called ink jet printer. The technology of timing the control of ejection with a computer, and moreover of ejecting minute liquid droplets, is well established, and it is possible to adapt this technology and to use it with the present invention as well.

The component of the reaction liquid which reacts instantaneously is appropriately selected according to the combination of the reactive components of the first and the second (hereinafter, shown as first/second) liquids. Although, for example, a combination of substances which undergoes interfacial polymerization, such as an amine and hydrochloric acid, or a combination of substances which undergoes a chemical reaction/a linking reaction, such as isocyanate and an amine, or a combination of substances which undergoes an aggregation reaction, such as sodium alginate or carboxymethylcellulose sodium and calcium chloride, or a combination of substances which undergoes a cross linking reaction, such as polyvinyl alcohol and borax bonded by hydrogen bonding, an insolubilization reaction by carboxymethylcellulose sodium and an acid, or a combination causing an aggregation, for example, by adding organic particles or inorganic particles dispersed in water to a liquid whose pH is different may be suggested, these are not to be considered as being limiting. It should be understood that examples for combinations of the reactive components of the first/second liquids and the component for the reaction liquid are shown in Table 1.

**Table 1**

| First liquid (component) | Second liquid (component) | Reaction liquid (component ) | Remarks |
|---|---|---|---|
| Amine compound Example: 1,6 hexa-diamine | Amine compound Example: 1,6 hexa-diamine | Hydrochloric acid Example: Sepacoil chloride | Interfacial polymerization |
| Amine compound Example: 1,6 hexa-diamine | Amine compound Example: 1,6 hexa-diamine | Isocyanate Example: TDI | Cross-linked |
| Sodium alginate | Sodium alginate | Polyvalent cations Example: Calcium chloride | Cross-linked, Aggregated |
| Carboxylmethylcellulose sodium | Carboxylmethylcellulose sodium | Polyvalent cations Example: Calcium chloride | Cross-linked, Aggregated |
| Sodium acrylate | Sodium acrylate | Polyvalent cations Example: Calcium chloride | Cross-linked, Aggregated |
| Polyvinyl alcohol | Polyvinyl alcohol | Borax | Cross-linked |
| Carboxylmethylcellulose sodium | Carboxylmethylcellulose sodium | Acid Example: Hydrochloric acid | Insolubilization |

With the combinations which are shown by way of example in the above, it would also be acceptable to reverse the reactive component of the first/second liquid, and of the component for the reaction liquid. For example, it would also be acceptable to use acid chloride for the first/second liquid, and to use an amine compound for the reaction liquid, and the combination is important.

Furthermore, the viscosities of the first/second liquids and the reaction liquid are also optimized. The shape of the particles may depend on the relative magnitudes of the reaction rates of the first/second liquids and the reaction liquid, and the magnitude of the diffusion speed of the first/second liquids within the reaction liquid. If the reaction rate is sufficiently greater than the diffusion speed, then they become spherical, while, if the diffusion speed is faster, they may easily become circular plate-shaped particles. Since the diffusion is inversely proportional to the viscosity, if the viscosities of the first/second liquids are high, the diffusion speed becomes slow, which means that it is easy for the particles to become spherical.

The reaction between the first/second liquids and the reaction liquid occurs at the surfaces of the particles. Subsequently, the reaction liquid diffuses into the interiors of the particles, and the reaction occurs in the interiors of the particles. If it is difficult for the reaction liquid to diffuse into the interiors of the particles, then inside the particles becomes a nonreaction zone, and it may happen that the first liquid and the second liquid mix together and form a particle of a single color, which is undesirable. In particular, it often happens that, when the particles have been taken out from the reaction liquid and while they are being dried, they become one color, which is undesirable. In this case, it is possible to add pigment to the first/second liquids in order to prevent the first/second liquids from being mixed together in the interiors of the particles. Along with preventing color mixing due to combination of the pigments, there is the beneficial aspect that it is possible to enhance the contrast even when actually performing display.

The reaction between the first/second liquids and the reaction liquid occurs at the surfaces of the particles. Due to this, if, for example, with the main component of both of the first/second liquids being almost the same, the only difference is the presence or absence of coloring material, then this means that, although the color of the surface which originates from the first liquid droplet and the color of the surface which originates from the second liquid droplet are different, the particle is covered with almost the same reaction product. For rotation of the particle, it is necessary for a great difference to be imparted in the surface properties of the two hemispherical portions of the two-colored particles which originate from the two first/second liquids. For this, it is also possible to improve the rotation of the two-colored particles by dissolving and eliminating the reaction products upon their surfaces with a chemical or the like. For example, after two first/second liquids which use sodium alginate as their reactive component have coalesced, and have undergone a reaction in a aqueous solution of calcium chloride, it is possible to easily eliminate the reaction product upon the surface of the two-colored particles which have been obtained, by dipping the two-colored particles into a aqueous solution of ethylenediaminetetraacetic acid or the like.

Furthermore, the method of discharging the first liquid droplets and the second liquid droplets within a liquid will now be described. If the first/second liquid is a hydrophilic liquid, it may be discharged within a non-hydrophilic solvent such as oil or the like. For example, it is possible to form a solvent phase whose specific gravity is lighter than water on an aqueous phase which is a reaction liquid, and discharge a liquid droplet of two aqueous solutions into the solvent phase so as to be united and sinks to reach the reaction liquid phase.

However, in the above, examples have been explained in which only two liquid droplets were present, it is also possible to use a third liquid droplet, within the range of which the beneficial effect of the present invention is not lost. For example, methods are possible in which a third liquid droplet is discharged between the first liquid droplet and the second liquid droplet, or, after the first liquid droplet and the second liquid droplet have coalesced together, a third liquid droplet is atomized so that it paints the surface of the coalesced liquid droplet, and the like.

The two-colored particle of the present invention is desirably applied to a display method in which an electric field is applied from the outside, so as to cause them to rotate; and it is arranged for the type of electric charge upon the regions of the two-colors which originate in the first liquid droplet and the second liquid droplet to be different, or for their electric charge densities to be different, although they have the same electric charge.

For example, there is a method in which the types or the ratios of combination of the materials which are included in the first liquid droplet portions and the second liquid droplet portions which make up the two-colored particles are varied. In concrete terms, this is a method in which the type or the amount for combination of an electric charge control substance, of a pigment (for example, an anionic silica pigment or a cationic silica pigment), of an ionic resin (for example, carboxymethylcellulose sodium in which the degree of etherification is different), or the like, is varied. Furthermore, there is a method of varying the volumes of the first and second liquid droplets which are contacted, even though they are of the same material, or of varying their densities.

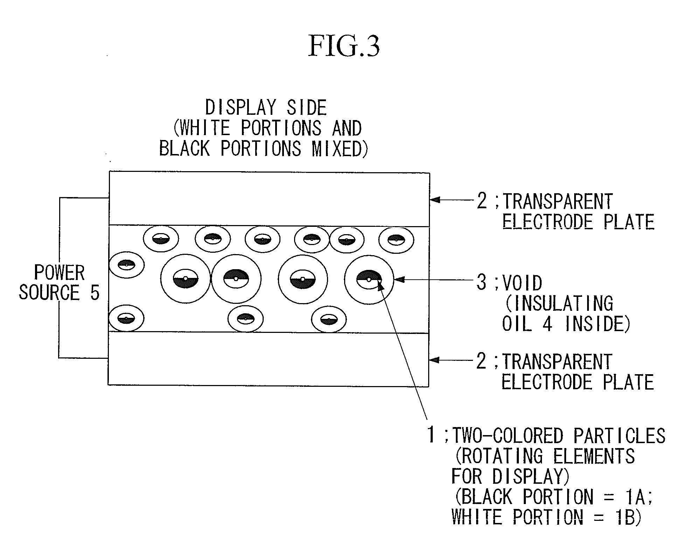

Furthermore, if it is to be used for digital paper or the like, it is desirable to ensure a difference in mass between those portions of the two-colored particles which originate from the first liquid droplets and those portions which originate from the second liquid droplets. With digital paper, a large number of two-colored particles are lined up, and display is performed with an electric field. As shown in FIG. 3, if the masses of the first liquid droplet portions and of the second liquid droplet portions (the two hemisphere portions of the two-colored particles) are the same, then, when viewed from the side of the surface, the first and second liquid droplet portions are mixed together, which is undesirable. In other words, if the first liquid droplet portions are white while the second liquid droplet portions are black, then the white and the black are undesirably mixed together. In this state, even if an electric field is applied, the color which is displayed does not change, since the white rotates to black, and the black rotates to white. For example, if the design is arranged so that, by differences in the electric charge control substance and/or the electric charge density, the electric field value which initiates rotation from white to black, and the electric field value which initiates rotation from black to white, are different, then, although lining up the colors by applying a constant electric field is possible, it is difficult in practice. In order to easily improve upon this problem, it is sufficient to ensure that there is a difference between the masses of the first liquid droplet portions and the masses of the second liquid droplet portions of the two-colored particles which are manufactured. The portions whose masses are greater will go downwards, and the problem of mixing of black and white disappears.

As a method for introducing a difference between the masses of the first liquid droplet portions and the masses of the second liquid droplet portions of the two-colored particles, there is a method in which, with the density of the solid contents held constant, a difference is introduced between the volumes of the first liquid droplet portion and of the second liquid droplet portion; or a method in which, with the volumes held constant, a difference is introduced between the densities of the first liquid droplet portion and of the second liquid droplet portion; or the like.

It is desirable for at least one of the first liquid droplet portions and the second liquid droplet portions of the two-colored particles to contain a pigment, and various types of inorganic pigment or organic pigment are used. For example, an inorganic pigment such as barite powder, barium sulfate, barium carbonate, calcium carbonate, gypsum, clay, silica powder, minute particles of silicic acid, diatomite, talc, magnesium carbonate, alumina white, satin white, hydrozincite, white lead, lead sulfate, zinc sulfide, titanium oxide, antimony oxide, or the like, or an organic pigment such as nylon particles, Teflon (R) particles, acryl particles or the like may be suggested.

As the coloration material which may be taken advantage of in the two-colored particles of the present invention, there may be suggested: carbon black, acetylene black, aniline black, cyanine black, chrome yellow, zinc yellow, chrome barium oxide, cadmium yellow, yellow colored iron oxide, titanium yellow, lead oxide calcium napthol yellow, Hansa yellow, pigment yellow, tartrazine lake, quinoline yellow lake, permanent yellow, iron red, red lead, cadmium red, antimony cinnabar, permanent red, para red, chrome vermilion, permanent orange, Persian orange, brilliant scarlet, o-indigo red, ultramarine blue, phthalocyanine blue, indigo, or the like.

For the electrification control substance (also termed a Charge Control Agent, or a polarity control substance), there may be suggested nigrosine dye, amine alkoxide, alkylamide, phosphorus and tungsten alone or in combination, molybdenum oxide chelate pigment, fluoro-activator, hydrophobic silica, a metal salt of monoads dye, a sulfonyl amine of copper phthalocyanine, oil black, a naphthene oxide metal salt, or the like. Moreover, it will also be acceptable for the electrification control substance also to be used as the colored substance, or for the colored substance also to be used as the electrification control substance.

Furthermore, it is also possible to apply the two-colored particles of the present invention to a display method in which a magnetic field is applied from the outside, so that they are rotated; in that case, at least one of the first liquid droplets and the second liquid droplets must contain a metal. By using a magnetic substance such as a metal, it is possible to excite the rotation in an efficient manner.

As the metal which is used in the present invention, there are the elements from IIIB₂₁Sc to VIIB of the periodic table (the long-form type), and the transition elements of Group VIII. The electron arrangement has one or two electrons in the outermost orbital shell, and, along with increase of the atomic number, electrons fill up into the inner d or f orbits. It is possible to utilize oxides, compounds, mixtures or the like in which these elements are included. It is desirable to utilize those among these metals which are magnetic. As concrete examples, there may be suggested iron oxide (Fe₂O₃ or Fe₃O₄), iron nitride (Fe₄N), CoNi, Co ferrite, MnZn ferrite, and the like. The magnetic substance is desirably in the form of powder, and it is desirable for it to be dispersed in water or a solvent, and for it to be used as mixed with the first liquid or with the second liquid.

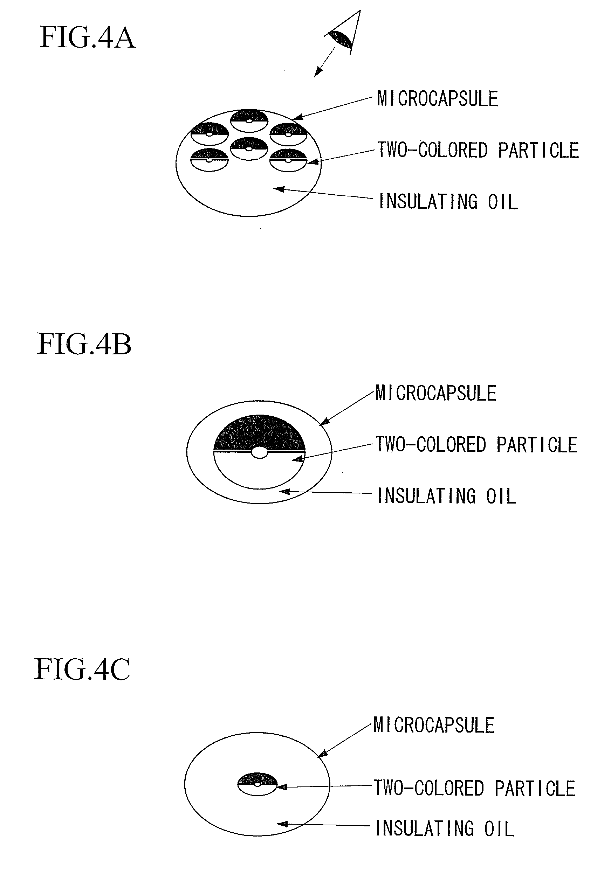

Next, the method of producing microcapsules which include the two-colored particles, as elements for display, will be described. If the two-colored particles have been microcapsulized, the diameter of the two-colored particles and the number of the two-colored particles which are enveloped influences the quality of the display. Even with the same microcapsule diameter, the quality is different if a large number of small particles are enveloped, or if one large particle is enveloped. This will now be explained using FIGS. 4a, 4b, and 4c. FIG. 4a which show the black portions at the upper faces of the two-colored particles; however, since there is a large number of small particles, and since parts of the white portions at the lower faces of the two-colored particles are recognized to be reversed, by comparison with FIG. 4b in which a single large particle is enveloped, the contrast is reduced a little. FIG. 4c is a capsule in which one small particle is enveloped, however, by comparison with FIGS. 4a and 4b, there is a tendency for the density to become low, since the black area is small.

With a normal method for manufacturing the microcapsules, a large number of particles are enveloped within the microcapsules. A special method is necessary for manufacture of microcapsules which envelope only a single particle.

Microencapsulation may be performed by a chemical method (an interfacial polymerization method or an insoluble reaction method), a physical method (an atomization drying method or a fluidized bed method), a physico-chemical method (a phase separation method or an interfacial precipitation method), or the like. For the capsule membrane, a membrane which has optical transparency is desirable. As the material for the microcapsule membrane, there may be suggested diamine, a reactant of diol and dichloric acid, alginic acid, vectinic acid, a calcium salt of carboxymethylcellulose, gelatin, gum arabic, polystyrene type resin, polyvinyl acetate resin, cellulose acetate butylate resin, cellulose type resin, polymethyl-methacrylate, polyester, polyamide, polyurethane, polyurea, polyether, polyvinyl alcohol, or the like.

The polarity of the insulating oil which is used in the present invention is low. On the other hand, as shown by their method of manufacture, the two-colored particles which are used for the present invention have high reactivity because they undergo a reaction instantaneously, which means that their polarity is high. Due to this, it is difficult to envelope a liquid mixture of the insulating oil and the two-colored particles in microcapsules. When enveloping the microcapsules, the affinity of the insulating oil and the two-colored particles is weak, while the affinity of the two-colored particles for the microcapsule material is high. Accordingly, it often happens that the two-colored particles become embedded in the microcapsule walls. In order to prevent this, it is necessary to include a surfactant in the insulating oil, so as to increase the chemical attraction between the insulating oil and the two-colored particles. It is desirable for the HLB of the surfactant to be low. With two-colored particles such as in the prior art, the main constituent of which is a wax, the affinity with the insulating oil is higher, so that it is difficult for this type of problem to occur.

As a concrete method of manufacture of the microcapsules enveloping two-colored particles of the present invention, a method will be acceptable in which the microcapsules are made by adding the two-colored particles which have been made in advance, and insulating oil, into a solution which includes the material for the microcapsules. Furthermore, in the encapsulation process, it is possible to manufacture capsules of a desired particle radius and shape by a method of stirring with a stirrer, a method of forming the capsules by discharging a compound for the capsules from a nozzle which has an extremely small diameter, or a method of forming the capsules by atomizing a compound for the capsules. With the above described methods, it is easy to make a large number of microcapsules in which two-colored particles are enveloped.

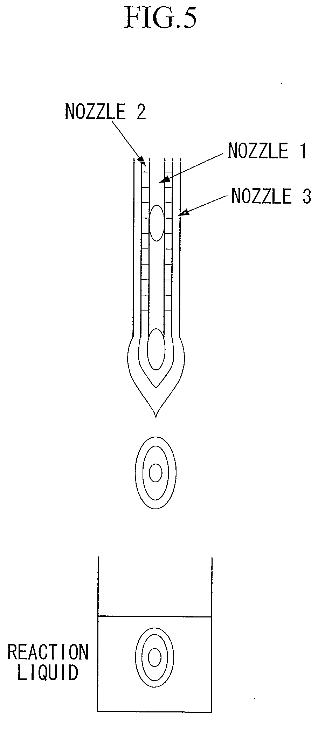

A method for making microcapsules which envelope a single two-colored particle will now be explained with reference to FIG. 5. FIG. 5 is a schematic cross sectional view showing a nozzle portion of a microcapsule manufacturing device. A mixture of insulating oil and the two-colored particles is supplied to a nozzle 1 and extruded therefrom, the same insulating oil as is supplied to the nozzle 1 is supplied independently to a nozzle 2 and extruded therefrom, and the material which is to become the skins of the microcapsules is supplied to a nozzle 3 and is extruded therefrom. At this time, the conditions are optimized so that only one of the two-colored particles is extruded from the nozzle 1. The materials which are extruded from the nozzles 1 through 3 become a single liquid droplet due to their surface tension, and this liquid droplet falls down into the reaction liquid, which reacts with the material which has been extruded from the nozzle 3.

A combination of a material which is extruded from the nozzle 3 and a reaction liquid which undergoes interfacial polymerization is desirable. For example, a combination of amine and acid chloride, or a combination of sodium alginate or carboxymethylcellulose sodium and calcium chloride, may be suggested. Furthermore, although their reaction is slow, a combination of polyvinyl alcohol and borax or the like, or a combination of carboxymethylcellulose sodium and acid, may also be suggested, but these are not to be construed as being limiting. It is desirable for the material which is extruded from the nozzle 3 to be a water solution. It is easier for this to turn into spherical drops of liquid, than in the case of using a solvent, since its surface tension is high.

Furthermore, the nozzle 2 is a nozzle which is provided so that the nozzle 3 material and the nozzle 1 material should not be mixed together. If there is no problem, it would be acceptable only to provide two nozzles, that is, the nozzle 1 and the nozzle 3.

The microcapsules are mixed with a binder resin and applied. As for the binder resin which can be used, it is desirable for it to be transparent, and to have almost the same refractive index as the resin from which the microcapsules are formed. If the refractive index is much different, the display sheet which is produced is not even, and the boundaries between the microcapsules and the binder resin stand out visually, which is undesirable.

Furthermore, if the dielectric constants of the interior of the microcapsules and of the binder resin are different, the electric field within the microcapsules becomes uneven, due to being influenced by dielectric polarization. For example, when the dielectric constant of the binder resin is high as compared to that within the microcapsules, the electric field becomes weak in the central portions of the microcapsules. It is more desirable for the dielectric constants of the liquid within the microcapsules and of the binder resin to be approximately equal to one another.

Next, the method of manufacturing a display sheet using these two-colored particles will be explained. Normally, the two-colored particles are dispersed within a matrix resin, and are made into a sheet. Although the sheet is caused to swell up by the insulating oil, the swelling ratio is different according to the grade of the insulating oil. If the viscosity of the insulating oil is low, the swelling ratio of the sheet becomes high, and cavities can easily be created. Furthermore, when the cross-linking density of the matrix resin drops, the swelling ratio becomes high. However, in this case, the strength of the sheet becomes low, and the problem arises that when the sheet is bent, the sheet may break in two.

Furthermore, even if a matrix resin of low cross-linking density is used, and it is processed with an insulating oil of low viscosity, there is still the problem that it is not possible to create perfect cavities, and that portions of the surfaces of the two-colored particles may adhere to the matrix resin.

Thus, with the present invention, in order to prevent the above-described adhesion, it is characteristic that a releasing substance is applied to the surfaces of the two-colored particles. Since it is possible to form the cavities reliably by employing such a releasing substance, it becomes possible to employ insulating oils and matrix resins, as described above, which have a wide range of viscosity and a wide range of degree of cross-linking.

As the amount of painting of the releasing substance for obtaining the beneficial effect, it is desirable for the relationship R2/R1 = 1.02 - 3 to hold between the diameter R1 of the two-colored particles, and the particle diameter R2 of the two-colored particles after the releasing substance has been applied to their surfaces. Since the releasing substance dissolves in the insulating oil, there is the beneficial effect of formation of the cavities due to the swelling of the matrix resin, and also of formation of the cavities due to dissolving of the releasing substance, so that the cavities are formed efficiently.

With regard to the method for rotation of the two-colored particles, this has already been described, and the method described below is desirable.

For causing the rotation of the two-colored particles with an electric field, there are the methods: (1) changing the type of electrical charge of the colored portions of the two colors between positive and negative; and (2) with the same type of electric charge, imparting a difference in electrical charge density to the colored portions of the two colors. The rotation behavior of the separately colored particles in the presence of an electric field is described on page 958 of "49th Applied Physics Meeting Related Federation Lectures Abstracts Collection, No. 3 (Ouyou Butsuri Gakkai Kankei Rengoukai Kouenyokoushu)"; however, theoretically, in the case of method (1), drifting does not occur, and only rotation takes place. In the case of method (2), both drifting and rotation are present.

Furthermore, as methods for rotating the two-colored particles with a magnetic field, there are the methods: (1) making them into permanent magnets by applying magnetism so that one of the two separate colors becomes N and the other one S; and (2) of including a magnetic substance into one of the two separate colors, while introducing into the other an organic compound, which is a non-magnetic substance.

Although the interaction between the particle surfaces and the matrix resin surface, the viscosity of the insulating oil, and so on exert an influence upon the rotation of the two-colored particles, the ratio between the particle diameter and the cavity diameter also exerts an influence. In order to produce a sufficient rotation, it is necessary for the relationship R/r ≥ 1.05 to be satisfied, where r is the particle diameter and R is the cavity diameter. If the cavities are sufficiently large, the rotation is not hindered, but if they are too large, problems arise with the displayed image. In order to control R/r, there is the possibility of varying the amount of the releasing substance which is applied to the separately colored particles, the type and the cross-linking density of the matrix resin, and the type and the viscosity of the insulating oil. From the point of view of quality control, control according to the amount of releasing substance which is applied is performed easily.

As the releasing substance which is used in the present invention, it is possible to cite, by way of example, paraffin wax, candelia wax, Carnauba wax, rice wax, sumac wax, yellow beeswax, lanolin, montan wax, polyethylene wax, sazole wax, alphatic series amides (hydroxy amide stearate, hydroxy methyl stearate, amide laurylates, amide stearates, amide oleates, etc.), alphatic series amines (dodecyl amine, tetradecyl amine, oleyl amine, etc.), fatty esters (methyl laurylate, methyl myristate, methyl stearate, etc.), glycol fatty esters (ester fatty glycerates, ester fatty sorbitates, ester fatty propylene glycolates, ester fatty ethylene glycolates), silicone resin, fluoro resin, or the like. Among these, paraffin wax is desirable, since it can be easily dissolved in various types of insulating oil.

As the matrix resin which may be used for the present invention, there are various types of silicone elastomer or thermoplastic resin elastomers. As thermoplastic resin isomers, there may be suggested, for example, ethylene-propylene copolymers, ethylene-propylene-butane copolymers, styrene-butadiene copolymers, and the like. Among the above, silicone elastomers are desirable, because it is easy to form a sheet including the particles which is optically transparent. Furthermore, the case must be considered in which, due to the type of the releasing substance, because of the temperature during hardening, it diffuses into the matrix material, which is undesirable. In order to prevent this sort of diffusion of the releasing substance, by using, as the matrix resin, a normal temperature hardening type silicone, or one which hardens at a low temperature, it becomes possible to ensure that the releasing substance remains upon the surfaces of the two-colored particles. Here, by low temperature hardening, is meant a substance which hardens at or below 70°C, and desirably at or below 50°C.

As the insulating oil which may be utilized in the present invention, there may be suggested various types of silicone oil, mineral oil, vegetable oil, or synthetic oil. As a vegetable oil, for example, there may be used castor oil, cotton-seed oil, rape-seed oil, or the like; as a synthetic oil, there may be used aliphatic series hydrocarbon type oil, aromatic type hydrocarbon oil, alicyclic hydrocarbon type oil, or halogenized hydrocarbon type oil or the like. For causing swelling of the matrix resin, it is desirable to employ an oil which has a low viscosity, for example less than about 100 cps.

### EMBODIMENTS:

Although the present invention is explained in detail in the Embodiments described below, the range of the present invention is not limited by these embodiments. It should be understood that in the Embodiments, unless specifically stated otherwise, "%" and "parts" mean "% by mass" and "parts by mass".

### <Embodiment 1>

### The first liquid

A 9% PVA solution (trademark PVA145H, a product of Kuraray Co., Ltd.): 100 parts (solution)
12.5% cationized silica pigment dispersion liquid (trademark: KH-1, Tokuyama Co. Ltd.): 356 parts (dispersion liquid)
A cationic pigment (trademark: Placarable HB, a product of Mikuni Shikiso Co., Ltd.): 2 parts (undiluted solution)

### The second liquid

A 9% PVA solution (trademark: PVA145H, a product of Kuraray Co. Ltd.): 100 parts (solution)
12.5% cationized silica pigment dispersion liquid (trademark: KH-1, Tokuyama Co. Ltd.): 356 parts (dispersion liquid)

### The reaction liquid

### A 3% solution of borax in water.

Each of the first liquid and the second liquid was taken into a dropper, and liquid droplets were manufactured and were dropped into the reaction liquid. The various liquid droplets coalesced as they dropped and became a single liquid droplet, which hardened as soon as it came into contact with the reaction liquid. The particles which were thus created were two-colored particles of which half was colored white and the rest was colored blue. These particles were washed in distilled water and were subsequently dried, and two-colored particles of 1 mm diameter were obtained. Next, evaluations as described below were performed for these two-colored particles.

### Evaluation (1)

The two-colored particles were put into cells in which insulating oil was put, and, when the cells were sandwiched between two transparent ITO electrodes and an electric field was applied, the two-colored particles were rotated. Furthermore, when the polarity of the electric field was reversed, the two-colored particles again rotated, and returned to their original orientations.

### Evaluation (2)

The two-colored particles were combined with silicone rubber (trademark: KF109A/KF109B=1/1, a product of the Shin-Etsu Chemical Works Co., Ltd.), and were made into a sheet by being hardened at 120°C. This sheet was swollen with a silicone oil (trademark: SH200-10, a product of the Toray Dow Coming Silicone Co., Ltd.), so that voids, filled with the silicone oil, were created around the two-colored particles. When the cell was sandwiched between two transparent ITO electrodes and an electric field was applied, the two-colored particles were rotated. Furthermore, when the polarity of the electric field was reversed, the two-colored particles again rotated, and returned to their original orientations.

### <Embodiment 2>

### The first liquid

2.9% sodium alginate (reagent): 100 parts (solution)
20% silica pigment dispersion liquid (Trademark: Silojet 703A, a product of Grace-Debison Co., Ltd.): 73 parts (dispersion liquid)
Anionic pigment (trademark: SA Blue, a product of Mikuni Shikiso Co., Ltd.): 0.7 parts (undiluted solution)

### The second liquid

2.9% sodium alginate (reagent): 100 parts (solution)
20% silica pigment dispersion liquid (Trademark: Silojet 703A, a product of Grace-Debison Co., Ltd.): 73 parts (dispersion liquid)

### The reaction liquid

### 3% calcium chloride solution

Each of the first liquid and the second liquid was taken into a dropper, and liquid droplets were produced and were dropped into the reaction liquid. The various liquid droplets coalesced as they dropped and became single liquid droplets, which hardened as soon as they came into contact with the reaction liquid. The particles which were thus created were two-color particles of which half was colored white and the rest was colored blue. These particles were washed in distilled water and were subsequently dried, and two-colored particles of 1 mm diameter were obtained. Next, evaluations as described below were performed for these two-colored particles.

### Evaluation (1)

The two-colored particles were put into cells in which insulating oil was put, and, when the cells were sandwiched between two transparent ITO electrodes and an electric field was applied, the two-colored particles were rotated. Furthermore, when the polarity of the electric field was reversed, the two-colored particles again rotated, and returned to their original orientations.

### Evaluation (2)

The two-colored particles were combined with silicone rubber (trademark: KF109A · B, a product of the Shin-Etsu Chemical Works Co., Ltd.), and were made into a sheet by hardening. This sheet was swollen with silicone oil (trademark: SH200-10, a product of the Toray Dow Coming Silicone Co., Ltd.), and voids were created which were filled with silicone oil around the two-colored particles. When the cells were sandwiched between two transparent ITO electrodes and an electric field was applied, the two-colored particles were rotated. Furthermore, when the polarity of the electric field was reversed, the two-colored particles again rotated, and returned to their original orientations.

### <Embodiment 3>

### The first liquid

2.9% sodium alginate (reagent): 100 parts (solution)
20% silica pigment dispersion liquid (Trademark: Silojet 703A, a product of Grace-Debison Co., Ltd.): 73 parts (dispersion liquid)
Anionic pigment (trademark: SA Blue, a product of Mikuni Shikiso Co., Ltd.): 0.7 parts (undiluted solution)
Water: 1560 parts

### The second liquid

2.9% sodium alginate (reagent): 100 parts (solution)
20% silica pigment dispersion liquid (Trademark: Silojet 703A, a product of Grace-Debison Co., Ltd.): 73 parts (dispersion liquid)
Water: 1560 parts

### The reaction liquid

### 3% calcium chloride solution

Each of the first liquid and the second liquid was taken into a spray (trademark: Adomizer 7 ml, a product of Tsubaki Co. Ltd.), and they were mutually contacted and atomized. The atomized mist fell into the reaction liquid and was hardened thereby. At this time, ones in which atomized mists had coalesced and ones in which mists had not contacted one another were present. By microscopic observation, only the particles which had contacted and coalesced were picked out, and these were washed with distilled water, and then in methanol, and were then washed with ethyl acetate. After this they were dried, and thereby two-colored particles of diameter 30 µm were obtained.

Subsequently when, by methods the same as in Evaluation (1) and Evaluation (2) of Embodiment 2, the rotation behavior of the two-colored particles was observed, they rotated satisfactorily.

### <Embodiment 4>

### The first liquid

2.9% sodium alginate (reagent): 100 parts (solution)
20% silica pigment dispersion liquid (Trademark: Silojet 703A, a product of Grace-Debison Co., Ltd.): 73 parts (dispersion liquid)
Anionic pigment (trademark: SA Blue, a product of Mikuni Shikiso Co., Ltd.): 0.7 parts (undiluted solution)

### The second liquid

2.9% sodium alginate (reagent): 100 parts (solution)
10% titanium dioxide pigment dispersion liquid (trademark: F2030, a product of Ishihara Industries Co., Ltd.): 73 parts (dispersion liquid)

### The reaction liquid

### 3% calcium chloride solution

Each of the first liquid and the second liquid was taken into a dropper, and liquid droplets were produced and were dropped into the reaction liquid. The various liquid droplets coalesced as they dropped and became single liquid droplets, which hardened as soon as they came into contact with the reaction liquid. The particles which were thus created were two-colored particles of which half was colored white and the rest was colored blue. These particles were washed in distilled water and were subsequently dried, and two-colored particles of 1 mm diameter were obtained.

Subsequently when, by methods the same as in Evaluation (1) and Evaluation (2) of Embodiment 2, the rotation behavior of the two-colored particles was observed, they rotated satisfactorily.

### <Embodiment 5>

### The first liquid

A 9% PVA solution (trademark PVA145H, a product of Kuraray Co. Ltd.): 100 parts (solution)
12.5% cationized silica pigment dispersion liquid (trademark: KH-1, Tokuyama Co. Ltd.): 356 parts (dispersion liquid)

### The second liquid

2.9% sodium alginate (reagent): 100 parts (solution)
20% silica pigment dispersion liquid (Trademark: Silojet 703A, a product of Grace-Debison Co., Ltd.): 73 parts (dispersion liquid)
Anionic pigment (trademark: SA Blue, a product of Mikuni Shikiso Co., Ltd.): 0.7 parts (undiluted solution)

### The reaction liquid (1)

A 3% calcium chloride solution

### The reaction liquid (2)

A 3% solution of borax in water

Each of the first liquid and the second liquid was taken into a dropper, and liquid droplets were manufactured and were dropped into the reaction liquid (1). The various liquid droplets coalesced as they dropped and became single liquid droplets, which hardened/solidified as soon as they came into contact with the reaction liquid. The sodium alginate of the second liquid droplets reacted with the calcium chloride, and the 12.5% silica pigment dispersion liquid (trademark: KH1, a product of Tokuyama Co., Ltd.) of the first liquid droplets was aggregated by the pH of the calcium chloride aqueous solution. The particles which were thus created were two-colored particles of which half was colored white and the rest was colored blue. These particles were taken out, and were put into the reaction liquid (2) and the PVA was hardened. They were washed in distilled water and were subsequently dried, and two-colored particles of 1 mm diameter were obtained.

Subsequently, by the same method as in Evaluation (1) and Evaluation (2) of Embodiment 1, by observation of the rotation states of the two-colored particles, they rotated satisfactorily.

### <Embodiment 6>

### The first liquid

2.9% sodium alginate (reagent): 100 parts (solution)
20% silica pigment dispersion liquid (Trademark: Silojet 703A, a product of Grace-Debison Co., Ltd.): 73 parts (dispersion liquid)
Anionic pigment (trademark: SA Blue, a product of Mikuni Shikiso Co., Ltd.): 0.7 parts (undiluted solution)

### The second liquid

1.0% sodium alginate (reagent): 100 parts (solution)
5% silica pigment dispersion liquid (Trademark: Silojet 703A, a product of Grace-Debison Co., Ltd.): 100 parts (dispersion liquid)

### The reaction liquid

### 3% calcium chloride solution

Each of the first liquid and the second liquid was taken into a dropper, and liquid droplets each of 0.02 g were manufactured, and were dropped into the reaction liquid. The various liquid droplets coalesced as they dropped and became a single liquid droplet, which hardened at the moment it came into contact with the reaction liquid. The particles which were thus created were two-colored particles of which half was colored white and the rest was colored blue. These particles were washed in distilled water and were subsequently dried, and two-colored particles of 1 mm diameter were obtained. When the mass ratio of the blue portions to the white portions was calculated from the initial amounts in the liquid droplets, and the solid contents density of the first and the second liquid droplets, it was 0.002/0.0006, so that the mass of the blue portions was greater than the mass of the white portions.

Subsequently when, by methods the same as in Evaluation (1) and Evaluation (2) of Embodiment 2, the rotation behavior of the two-colored particles was observed, they rotated satisfactorily.

### <Embodiment 7>

### The first liquid

1% sodium alginate (reagent): 13 parts (solution)
Nylon powder (trademark: 2002EXD, a product of the Elf atochem Co., Ltd.): 2 parts (solid form)

### The second liquid

5% sodium alginate (reagent): 20 parts (solution)
20% silica pigment dispersion liquid (Trademark: Silojet 703A, a product of Grace-Debison Co., Ltd.): 80 parts (dispersion liquid)
Anionic pigment (trademark: SA Blue, a product of Mikuni Shikiso Co., Ltd.): 0.7 parts (undiluted solution)

### The reaction liquid

### 3% calcium chloride solution

Each of the first liquid and the second liquid was taken into a dropper, and liquid droplets were produced, and were dropped into the reaction liquid. The various liquid droplets coalesced as they dropped and became a single liquid droplet, which hardened at the moment it came into contact with the reaction liquid. The particles which were thus created were two-colored particles of which half was colored white and the rest was colored blue. These particles were washed in distilled water and were subsequently dried, and two-colored particles of 1 mm diameter were obtained. The particles which had been dried were dipped in a 0.1 methylenediamine tetraacetate aqueous solution, so that the alginate was eliminated.

Subsequently when, by methods the same as in Evaluation (1) and Evaluation (2) of Embodiment 2, the rotation behavior of the two-colored particles was observed, they rotated satisfactorily.

### <Embodiment 8>

### The first liquid

3% chitosan aqueous solution (trademark: L Grade, a product of Kimica Co. Ltd.), chitosan dissolved in 0.05N hydrochloric acid): 100 parts (solution)
12.5% cationized silica pigment dispersion liquid (trademark: KH-1, Tokuyama Co. Ltd.): 356 parts (dispersion liquid)
A 3% PVA solution (trademark PVA145H, a product of Kuraray Co. Ltd.): 50 parts (solution)

### The second liquid

2.9% sodium alginate (reagent): 100 parts (solution)
20% silica pigment (Trademark: Silojet 703A, a product of Grace-Debison Co., Ltd.): 73 parts (dispersion liquid)
Anionic pigment (trademark: SA Blue, a product of Mikuni Shikiso Co., Ltd.): 0.7 parts (undiluted solution)

### The reaction liquid (1)

3% calcium chloride solution and 1% sodium hydroxide aqueous solution compound (mixing ratio 10/1)

### The reaction liquid (2)

A 3% solution of borax in water.

Each of the first liquid and the second liquid was taken into a dropper, and liquid droplets were manufactured and were dropped into the reaction liquid (1). The various liquid droplets coalesced as they dropped and became a single liquid droplet, which hardened at the moment it came into contact with the reaction liquid. The sodium alginate in the second liquid droplets reacted with the calcium chloride, while the chitosan in the first liquid droplets was insolubilized due to pH of the calcium chloride aqueous solution and aggregated. The particles which were thus created were two-colored particles of which half was colored white and the rest was colored blue. These particles were taken out and put into the reaction liquid (2), and the PVA was hardened. They were washed in distilled water and were subsequently dried, so that two-colored particles of 1 mm diameter were obtained.

Subsequently when, by methods the same as in Evaluation (1) and Evaluation (2) of Embodiment 2, the rotation behavior of the two-colored particles was observed, they rotated satisfactorily.

### <Embodiment 9>

### The first liquid

2.9% sodium alginate solution (reagent): 100 parts (solution)
10% iron oxide (reagent, 0.3 µm diameter) dispersion liquid: 100 parts (dispersion liquid)

### The second liquid

2,9% sodium alginate (reagent): 100 parts (solution)
20% silica pigment dispersion liquid: 73 parts (dispersion liquid) (Trademark: Silojet 703A, a product of Grace-Debison Co., Ltd.)

### The reaction liquid

### 3% calcium chloride solution

Each of the first liquid and the second liquid was taken into a dropper, and liquid droplets were manufactured, and were dropped into the reaction liquid. The various liquid droplets coalesced as they dropped and became a single liquid droplet, which hardened at the moment it came into contact with the reaction liquid. The particles which were thus created were two-colored particles of which half was colored white and the rest was colored brown. These particles were washed in distilled water and were subsequently dried, so that two-colored particles of 1 mm diameter were obtained. Next, these two-colored particles were inserted into transparent cells, into which an insulating oil was introduced. When a magnetic field was brought close from one direction, the two-colored particles were rotated.

### <Embodiment 10>

### The first liquid

2.9% sodium alginate (reagent): 100 parts (solution)
10% iron oxide (reagent, 0.3 µm diameter) dispersion liquid: 100 parts (dispersion liquid)
Water: 1560 parts

### The second liquid

2.9% sodium alginate (reagent): 100 parts (solution)
20% silica pigment dispersion liquid: 73 parts (dispersion liquid) (Trademark: Silojet 703A, a product of Grace-Debison Co., Ltd.)
Water: 1560 parts

### The reaction liquid

### 3% calcium chloride solution

Each of the first liquid and the second liquid was taken into a spray (trademark: Adomizer 7 ml, a product of Tsubaki Co. Ltd.), and they were contacted and atomized. The atomized mist fell into the reaction liquid and was hardened thereby. At this time, ones in which mists had coalesced by contact and ones which had not contacted one another were present. By microscopic observation, only the particles which had contacted and coalesced were picked out, and these were washed with distilled water, and then in methanol, and were then washed with ethyl acetate. After this they were dried, and thereby two-colored particles of dianieter 30 µm were obtained.

Next, these two-colored particles were inserted into transparent cells, into which an insulating oil was introduced. When a magnetic field was brought close from one direction, the two-colored particles were rotated.

### <Embodiment 11>

### The first liquid

A 9% PVA solution (trademark PVA145H, a product of Kuraray Co. Ltd.): 100 parts (solution)
12.5% cationized silica pigment dispersion liquid: 356 parts (dispersion liquid)
(trademark: KH-1, Tokuyama Co. Ltd.)

### The second liquid

2.9% sodium alginate (reagent): 100 parts (solution)
10% iron oxide (reagent, 0.3 µm diameter) dispersion liquid: 100 parts (dispersion liquid)

### Reaction liquid (1):

3% calcium chloride solution

### Reaction liquid (2):

A 3% solution of borax in water

Each of the first liquid and the second liquid was taken into a dropper, and liquid droplets were produced, and were dropped into the reaction liquid (1). The various liquid droplets coalesced as they dropped and became a single liquid droplet, which hardened/solidified at the moment it came into contact with the reaction liquid. The sodium alginate in the second liquid droplets reacted with the calcium chloride, while the 12.5% silica pigment dispersion liquid (trademark: KH-1, Tokuyama Co. Ltd.) in the first liquid droplets was aggregated by the pH of the calcium chloride aqueous solution. The particles which were thus created were two-colored particles of which half was colored white and the rest was colored brown. These particles were taken out and put into the reaction liquid (2), and the PVA was hardened. They were washed in distilled water and were subsequently dried, so that two-colored particles of 1 mm diameter were obtained.

Next, these two-colored particles were inserted into transparent cells, into which an insulating oil was introduced. When a magnetic field was brought close from one direction, the two-colored particles were rotated.

### <Embodiment 12>

### The first liquid

2.9% solution (reagent) of sodium alginate: 100 parts
10% iron oxide dispersion liquid (reagent, 0.3 µm diameter): 100 parts (dispersion liquid)

### The second liquid

2.9% sodium alginate (reagent): 100 parts (solution)
20% silica pigment dispersion liquid: 73 parts (dispersion liquid) (Trademark: Silojet 703A, Grace-Debison Co., Ltd.)
10% iron oxide (reagent, 0.3 µm diameter) dispersion liquid: 100 parts (dispersion liquid)

### Reaction liquid:

3% calcium chloride solution

Each of the first liquid and the second liquid was taken into a dropper, and liquid droplets were produced and were dropped into the reaction liquid. The various liquid droplets coalesced as they dropped and became a single liquid droplet, which hardened at the moment it came into contact with the reaction liquid. The particles which were thus created were two-colored particles of which half was colored light brown and the rest was colored brown. These particles were washed in distilled water and were subsequently dried, and two-colored particles of 1 mm diameter were obtained. A magnetic field was applied to these particles with an electromagnet, and they were magnetized so that their direction of magnetization was made to be uniform.

Next, these two-colored particles were inserted into transparent cells, into which an insulating oil was introduced. When a magnetic field was brought close from one direction, the two-colored particles were rotated.

### <Embodiment 13>

### The first liquid

A 9% PVA solution (trademark PVA145H, a product of Kuraray Co. Ltd.): 100 parts (solution)
12.5% cationized silica pigment dispersion liquid: 356 parts (dispersion liquid)
(trademark: KH-1, Tokuyama Co. Ltd.)

### The second liquid

2.9% sodium alginate (reagent): 100 parts (solution)
20% silica pigment dispersion liquid: 73 parts (dispersion liquid) (Trademark: Silojet 703A, a product of Grace-Debison Co., Ltd.)

### The third liquid

2.9% sodium alginate (reagent): 100 parts (solution)
10% iron oxide (reagent, 0.3 µm diameter) dispersion liquid: 100 parts (dispersion liquid)

### Reaction liquid (1):

3% calcium chloride solution

### Reaction liquid (2):

A 3% solution of borax in water

Each of the first liquid, the second liquid, and the third liquid was taken into a dropper, and liquid droplets were produced, and were dropped into the reaction liquid (1). The various liquid droplets coalesced as they dropped and became a single liquid droplet, which hardened/solidified at the moment it came into contact with the reaction liquid. The sodium alginate in the second and the third liquid droplets reacted with the calcium chloride, while the 12.5% silica pigment dispersion liquid (trademark: KH-1, Tokuyama Co. Ltd.) in the first liquid droplets was aggregated by the pH of the calcium chloride aqueous solution. The particles which were thus created were two-colored particles of which half was colored white and the rest was colored brown. These particles were taken out and put into the reaction liquid (2), and the PVA in the first liquid droplets was hardened. They were washed in distilled water and were subsequently dried, so that two-colored particles of 1 mm diameter were obtained.

Next, these two-colored particles were inserted into transparent cells, into which an insulating oil was introduced. When a magnetic field was brought close from one direction, the two-colored particles were rotated.

### <Embodiment 14> (Example 1 of manufacture of microcapsules with enveloped two-colored particles, and manufacture thereof into a display sheet)

### (1) Mixing of the two-colored particles and the insulating oil

0.228 g of a surfactant (trademark TSF4700, a product of GE Toshiba Silicone) was added to 50.1 g of silicone oil (trademark: TSF-451-10, a product of GE Toshiba Silicone, dielectric constant=2.6 F/m), and was stirred thereinto. Furthermore, 1.3 g of the two-colored particles manufactured according to Embodiment 3 were added, and were dispersed for 10 minutes with an ultrasonic disperser.

### (2) Preparation of the reaction liquid

25 g of water, 2.5 g of urea, and 0.25 g of resorcinol as a cross-linking agent were added to 50 g of a 5% aqueous solution of an ethylene-maleic anhydride alternating copolymer, and were dissolved by stirring using a three-one motor. The pH of this reaction liquid was 2.3.

### (3) The encapsulation reaction

A 12.5% NaOH aqueous solution was added to the reaction liquid, while stirring it, so as to adjust its pH to 3.5, and the mixture of two-colored particles and insulating oil, prepared as described in (1) above, was added. Subsequently, liquid droplets were formed by rotating a three one motor at 400 rpm. 6.25 g of 37% formaldehyde was added, and the mixture was heated to 55°C while continuously being stirred, and the reaction was continued for two hours, whereby microcapsules in which a plurality of two-colored particles were enveloped were manufactured. The microcapsules which were obtained were washed with methanol, and were dried.

### (4) The sheet manufacture

10 g of these capsules in which the two-colored particles were enveloped were mixed with 5 g of urethane type binder resin (trademark: NeoRezR-930, a product of the Kusumoto Chemical Manufacturing Co. Ltd.), and were painted upon a film base to which ITO had been applied, and were dried, so that, after drying, the thickness became 1 mm. To the opposite surface of the film base to which ITO had been applied, the same film base with ITO applied was mounted, and thereby a display panel was manufactured.

### (5) Evaluation

When voltage was applied to the display panel, and the performance for rotation of the two-colored particles and visual evaluation of the display image were appraised, they were satisfactory.

### <Embodiment 15> (Example 2 of manufacture of microcapsules with enveloped two-colored particles, and manufacture thereof into a display sheet)

### (1) Mixing of the two-colored particles and the insulating oil

0.228 g of a surfactant (trademark TSF4700, a product of GE Toshiba Silicone) was added to 50.1 g of silicone oil (trademark: TSF-451-10, a product of GE Toshiba Silicone Co. Ltd., dielectric constant=2.6 F/m), and was stirred thereinto. Furthermore, 1.3 g of the two-colored particles manufactured according to Embodiment 5 were added, and were dispersed for 10 minutes with an ultrasonic disperser.

### (2) Preparation of the reaction liquid

A 0.5% sodium alginate aqueous solution was prepared for the capsule membranes. Furthermore, a 3% calcium chloride aqueous solution was prepared as a hardener for the capsule membranes.

### (3) The encapsulation reaction

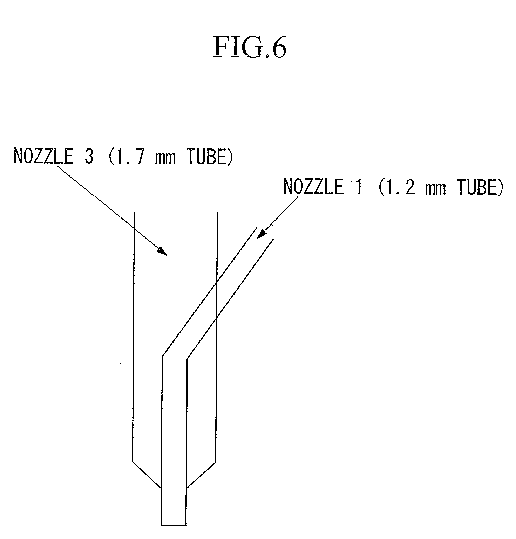

A nozzle with a tube was manufactured, as shown in FIG. 5. It was manufactured using a polytetrafluoroethylene tube of inner diameter 1.2 mm was used for the nozzle 1, and using a polytetrafluoroethylene tube of inner diameter 1.7 mm for the nozzle 3 (refer to FIG. 6; the nozzles 2 were not used).

The microcapsules which were obtained each enveloped a single two-colored particle. The microcapsules were washed with methanol, and were dried. The position and the shape of the point portion of the polytetrafluoroethylene tube was optimized so as to be able to form liquid droplets. The mixture of silicone oil and two-colored particles produced by (1) above was supplied into the polytetrafluoroethylene tube of the nozzle 1, and a 0.5% sodium alginate aqueous solution was supplied into the polytetrafluoroethylene tube of the nozzle 3. Pressure was applied to each of these nozzles with a dropper, so that liquid droplets were formed upon the nozzle points, and these droplets fell into a 3% calcium chloride aqueous solution, and thus the capsule membranes were hardened. Each of the microcapsules obtained had a single two-colored particle enveloped in it. The microcapsules were washed in methanol and were dried.

### (4) The sheet manufacture

The capsules in which the two-colored particles were enveloped were mixed with an sodium alginate resin, and were painted upon a film base to which ITO had been applied, and were dried, so that, after drying, the thickness became 1 mm. To the opposite surface of the film base to which ITO had been applied, the same film base with ITO applied was mounted, and thereby a display panel was manufactured.

### (5) Evaluation

When voltage was applied to the display panel, and the performance for rotation of the two-colored particles and visual evaluation of the display image were appraised, they were satisfactory.

Now, Embodiments of the method of manufacturing a rotating element panel for display of the present invention will be explained in the following.

### <Embodiment 16>

### Manufacture of the two-colored particles - Example 1

Two-colored particles were manufactured in the same manner as in Embodiment 5. However, the particle diameter of the two-colored particles which were obtained was 0.95 mm.

### Application of release agent to the two-colored particles

Molten paraffin wax (reagent, melting point 54 ~ 56°C) was applied to the two-colored particles which were manufactured according to Example 1 of two-colored particle manufacture. The method of application was to drop droplets of the molten wax so as to completely cover the two-colored particles. The diameter of the particles which had been covered with paraffin wax was 1.56 mm.

### Manufacture of a two-colored particle dispersion matrix resin sheet

The two-colored particles with applied paraffin wax which had been manufactured by the above described method were dispersed in a silicone elastomer of the composition described below, which can be hardened at normal temperature, and they were left for seven days at room temperature.
Sylgard 184 base and Sylgard 184 hardener = 10/1 (base/hardener, a product of Dow Corning Co.).

### Cavity manufacture

The resin sheet which had been manufactured by the above-described method was soaked for 24 hours in insulating oil (trademark: Isoper-G, a product of Exxon Chemical Co. Ltd.).

### Cavity evaluation

(1) Optical microscope evaluation: it was checked that cavities were formed over the entire surfaces of the two-colored particles.
(2) Two-colored particle rotation experiment: the resin sheet in which cavities had been formed was sandwiched between transparent electrodes, and an electric field was applied. With an electric field of about 700 V/mm, it was checked that the two-colored particles within the matrix resin sheet did rotate.

### <Embodiment 17>

Apart from the manufacture of the two-colored particle dispersion matrix resin sheet, the same operations were performed as in Embodiment 16.

### Manufacture of a two-colored particle dispersion matrix resin sheet

The two-colored particles with applied paraffin wax were dispersed in a silicone elastomer of the composition described below, and this was heated for one hour at 70°C. Sylgard 184 base / Sylgard 184 hardener = 10/1 (base/hardener, a product of Dow Corning Co.).

### Cavity manufacture

When the resin sheet which had been manufactured by the above-described method was observed, the paraffin wax of portions of the surfaces of the two-colored particles had diffused within the matrix resin. In this state, the resin sheet was soaked for 24 hours in insulating oil (trademark: Isoper-G, a product of Exxon Chemical Co. Ltd.).

### Cavity evaluation

(1) Optical microscope evaluation: it was checked that cavities were formed over the entire surfaces of the two-colored particles. However, by comparison with Embodiment 16, the cavities were deformed, and the reason of this is considered to be effect of paraffin wax streaks having diffused within the resin in addition to cavity caused by swelling of the matrix resin. Due to this, portions of the surfaces of the two-colored particles approached close to the matrix resin wall.
(2) Two-colored particle rotation experiment: the resin sheet in which the cavities had been formed was sandwiched between transparent electrodes, and an electric field was applied. With an electric field of about 800 V/mm, it was checked that the two-colored particles within the matrix resin sheet did rotate.

### <Embodiment 18>

Apart from the manufacture of the two-colored particle dispersion matrix resin sheet, the same operations were performed as in Embodiment 16.

### Manufacture of a two-colored particle dispersion matrix resin sheet

The two-colored particles with applied paraffin wax were dispersed in a silicone elastomer of the composition described below, and this was heated for three hours at 50°C.
Sylgard 184 base / Sylgard 184 hardener = 10/1 (base/hardener, a product of Dow Corning Co.).

### Cavity manufacture

This was performed in the same manner as in Embodiment 16.

### Cavity evaluation

This was performed in the same manner as in Embodiment 16.

### <Embodiment 19>

Apart from the manufacture of the two-colored particles with releasing substance applied, and the formation of the cavities, the same operations were performed as in Embodiment 16.

### Application of release agent to the two-colored particles

Melted Camauba wax was applied to the two-colored particles which were manufactured according to Example 1 of two-colored particle manufacture. The method of application was to drop droplets of the melted wax so as to completely cover the two-colored particles. The diameter of the particles which had been covered with paraffin wax was 1.60 mm.

### Cavity manufacture

The resin sheet was soaked for 24 hours in insulating oil (trademark: Isoper-G, a product of Exxon Chemical Co. Ltd.), but, since there still remained a quantity of the Carnaba wax which was not dissolved, it was further soaked for 48 hours.

### Cavity evaluation

This was performed in the same manner as in Embodiment 16.

### <Embodiment 20>

Apart from the manufacture of the two-colored particles with releasing substance applied, the same operations were performed as in Embodiment 16.

### Application of release agent to the two-colored particles

Two-colored particles with releasing substance applied were obtained by soaking the two-colored particles which were manufactured according to Example 1 of two-colored particle manufacture in a silicone type releasing substance solution (trademark: FS710, a product of Nippon Yushi Co. Ltd.), and by taking them out and drying them. The diameter of the particles was 1.64 mm.

### Cavity evaluation

This was done in the same manner as in Embodiment 16, but the rotation of the two-colored particles within the matrix resin sheet was somewhat sluggish.

### <Embodiment 21>

Apart from the manufacture of the two-colored particles with releasing substance applied, the same operations were performed as in Embodiment 16.

### Application of releasing substance to the two-colored particles

Melted paraffin wax (reagent, melting point 54 ~ 56°C) was applied to the two-colored particles which were manufactured according to Example 1 of two-colored particle manufacture. The method of application was to drop droplets of the melted wax so as to completely cover the two-colored particles. The diameter of the particles which had been covered with paraffin wax was 2.95 mm.

### Cavity evaluation

This was done in the same manner as in Embodiment 16. However, there was a certain feeling of discomfort with the display, due to the fact that the cavities were large. The cause was that, since the cavities were large, there was movement which was thought to be drift rather than rotation, and it is thought that floating up of the particles from the bottom of the sheet was taking place.

### <Embodiment 22>

Apart from the manufacture of the two-colored particle dispersed resin sheet, the same operations were performed as in Embodiment 16.

### Manufacture of a two-colored particle dispersion matrix resin sheet

The two-colored particles with applied paraffin wax were dispersed in a styrene-butadiene-styrene resin latex, and this was held for seven days under atmosphere of 50°C.

### Cavity evaluation

This was done in the same manner as in Embodiment 16. However, there was a certain feeling of discomfort, due to the fact that the matrix resin displayed a somewhat yellow color.

### <Embodiment 23>

### Application of releasing substance to the two-colored particles

Melten paraffin wax (reagent, melting point 54 ~ 56°C) was applied to the two-colored particles which were manufactured according to Embodiment 9. The method of application was to drop droplets of the melted wax so as to completely cover the two-colored particles. The diameter of the particles which had been covered with paraffin wax was 1.56 mm.

### Manufacture of a two-colored particle dispersion matrix resin sheet

The two-colored particles with applied paraffin wax which had been manufactured by the above described method were dispersed in a silicone elastomer of the composition described below, which can be hardened at normal temperature, and they were left for seven days at room temperature.
Sylgard 184 base / Sylgard 184 hardener = 10/1 (base/hardener, a product of Dow Corning Co.).

### Cavity manufacture

The resin sheet which had been manufactured by the above-described method was soaked for 24 hours in insulating oil (trademark: Isoper-G, a product of Exxon Chemical Co. Ltd.).

### Cavity evaluation

(1) Optical microscope evaluation: it was checked that cavities were formed over the entire surfaces of the two-colored particles.
(2) Two-colored particle rotation experiment: the resin sheet in which the cavities had been formed was sandwiched between transparent films, and, when a magnet was brought from one direction, with an electric field of about 800 V/mm, the two-colored particles within the matrix resin sheet did rotate.

### <Comparison Example 1>

The same operations as Embodiment 16 were performed. However, the releasing substance which was manufactured in Example 1 of two-colored particle manufacture was not applied to the two-colored particles.

### Cavity evaluation

(1) Optical microscope evaluation: Although cavities were formed upon the surfaces of the two-colored particles, matrix resin was adhered to portions of their surfaces.
(2) Two-colored particle rotation experiment: The resin sheet was sandwiched between transparent electrodes, and an electric field was applied.
By ON/OFF switching of an electric field of about 1000 V/mm, it was checked that the two-colored particles within the matrix resin sheet rotated.

### Industrial Applicability

According to the present invention, it becomes possible to manufacture rotating two-colored particles for display in a rotating particle type display with good efficiency, and moreover at a low cost, and this is a method of manufacture which is practical and highly desirable.

Furthermore, according to the present invention, two-colored particles are enveloped in microcapsules together with insulating oil, and the microcapsules, together with a binder, are made into sheet form, so that it is possible to provide a display sheet in which, while it is able to be made flexible, also has improved display quality.

Furthermore, with this method of creating voids, in which rotating two-colored particles for display are dispersed in a rotating particle type display within a matrix resin, thus converting them into a sheet, and the sheet is soaked in insulating oil, so that oil fills between the particles and the matrix resin, it is possible to form the voids reliably, and to control the size of the voids, thus providing a display sheet whose rotation behavior is excellent.

## Claims

1. A method of manufacturing a two-colored particle, comprising: a step of making a single liquid droplet by contacting together, within air or within a liquid, a first liquid droplet which has a first hue, and a second liquid droplet which has a hue which is different from the first hue; and a step of contacting said single liquid droplet with a reaction liquid so as to harden it instantaneously.

2. The method of manufacturing a two-colored particle according to claim 1, wherein electric charges of said first liquid droplet and of said second liquid droplet are different.

3. The method of manufacturing a two-colored particle according to claim 1, wherein, while the electric charge of said first liquid droplet and of said second liquid droplet is the same, electric charge density is different.

4. The method of manufacturing a two-colored particle according to any one of claims 1 through 3, further comprising a step in which said two-colored particle which has been made is dried, and in which it is arranged that the masses, within said two-colored particle after drying, of a portion which originates in said first liquid droplet and of a portion which originates in said second liquid droplet are different.

5. The method of manufacturing a two-colored particle according to any one of claims 1 through 3, wherein said first liquid droplet and said second liquid droplet are both ones which include reactive components, and further comprising: a step in which said two-colored particle which has been made is dried, and a step of dissolving and eliminating a reaction product on a surface of said two-colored particle.

6. The method of manufacturing a two-colored particle according to any one of claims 1 through 3, wherein said first and second liquid droplets are manufactured using a spray nozzle.

7. The method of manufacturing a two-colored particle according to any one of claims 1 through 3, wherein said first and second liquid droplets are manufactured using an ink jet nozzle.

8. The method of manufacturing a two-colored particle according to any one of claims 1 through 3, wherein at least one of said first liquid droplet and said second liquid droplet includes a pigment.

9. The method of manufacturing a two-colored particle according to any one of claims 1 through 3, wherein said first liquid droplet and said second liquid droplet include an electrification control substance.

10. A method of manufacturing a particle, comprising: a step of, using a plurality of liquid droplets, combining a metal into at least one liquid droplet; a step of contacting together said plurality of liquid droplets within air or within a liquid and making them into a single liquid droplet; and a step of contacting said liquid droplet which has become single with a reaction liquid so as to harden it instantaneously.

11. The method of manufacturing a particle according to claim 10, wherein said metal is a magnetic substance.

12. The method of manufacturing a particle according to claim 10, wherein, in said particle after it has hardened, among colors of portions which originate in said plurality of liquid droplets, the color of a portion which originates in at least one liquid droplet is different from the color of a portion which originates in another liquid droplet.

13. A display element which includes a two-colored particle, insulating oil, and a microcapsule enveloping said two-colored particle and said insulating oil, wherein said two-colored particle is manufactured by a method comprising: a step of making a single liquid droplet by contacting together, within air or within a liquid, a colored first liquid droplet, and a second liquid droplet which has a color different from said first liquid droplet; and a step of contacting said liquid droplet with a reaction liquid so as to harden it instantaneously.

14. The display element according to claim 13, wherein said two-colored particle within said microcapsule is rotated by an electric field.

15. The display element according to claim 13 or claim 14, wherein a single said two-colored particle is enveloped in a single said microcapsule.

16. The display element according to claim 13 or claim 14, wherein at least two of said two-colored particles are enveloped in a single said microcapsule.

17. The element for display according to claim 13 or claim 14, wherein said insulating oil includes a surfactant.

18. A method of manufacturing a display sheet, comprising: a step of applying a releasing substance on surfaces of two-colored particles having hemispheres of different color; a step of dispersing said two-colored particles within a matrix resin so as to form a sheet; and a step of soaking said sheet in an insulating oil and dissolving said releasing substance, so as to provide voids filled with the insulating oil between said two-colored particle surfaces and said matrix resin.

19. The method of manufacturing a display sheet according to claim 18, wherein said releasing substance is a polyolefin type material.

20. The method of manufacturing a display sheet according to claim 19, wherein said polyolefin type material is a paraffin wax.

21. The method of manufacturing a display sheet according to any one of Claims 18 through 20, wherein said matrix resin is a silicone elastomer.

22. The method of manufacturing a display sheet according to claim 21, wherein said silicone elastomer is a normal temperature hardening type elastomer.

23. The method of manufacturing a display sheet according to claim 21, wherein hardening temperature of said silicone elastomer is a temperature which is lower than a melting point of the releasing substance.
